(19) Europäisches Patentamt
European Patent Office
Office européen des brevets

(11) EP 4 811 449 A1

(12) EUROPEAN PATENT APPLICATION

(43) Date of publication:
**23.09.2026 Bulletin 2026/39**

(21) Application number: **26165433.9**

(22) Date of filing: **17.03.2026**

(51) International Patent Classification (IPC):
***H01M 4/36*** *(2006.01)* ***H01M 4/38*** *(2006.01)*
***H01M 4/587*** *(2010.01)* ***H01M 4/62*** *(2006.01)*

(52) Cooperative Patent Classification (CPC):
**H01M 4/366; H01M 4/364; H01M 4/386; H01M 4/587; H01M 4/625**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.03.2025 CN 202510319467**

(71) Applicant: **SAMSUNG SDI CO., LTD.**
**Yongin-si, Gyeonggi-do 17084 (KR)**

(72) Inventors:
- **SHE, Zimin**
**Shanghai, 200000 (CN)**
- **KIM, Young-Min**
**Shanghai, 200000 (CN)**
- **XU, Xiaodong**
**Shanghai, 200000 (CN)**
- **QU, Xiaodan**
**Shanghai, 200000 (CN)**
- **LI, Guangxin**
**Shanghai, 200000 (CN)**
- **ZHOU, Yu**
**Shanghai, 200000 (CN)**

(74) Representative: **Maiwald GmbH**
**Elisenhof**
**Elisenstraße 3**
**80335 München (DE)**

(54) **NEGATIVE ELECTRODE ACTIVE MATERIAL FOR LITHIUM ION BATTERIES, METHOD OF PREPARING NEGATIVE ELECTRODE ACTIVE MATERIAL, NEGATIVE ELECTRODE, AND LITHIUM ION BATTERIES**

(57) A negative electrode active material includes a silicon-carbon composite material. The silicon-carbon composite material comprises a first layer disposed at a center of the silicon-carbon composite material and including a hard carbon-based porous carbon material having silicon coated therein. A second layer coating is formed on the outside of the first layer and including one or more of a two-dimensional nanomaterial including graphene, graphene oxide, MXene, molybdenum disulfide, and graphyne.

FIG. 1

Silicon
A1
S1
S2



Processed by Luminess, 75001 PARIS (FR)

## Description

## BACKGROUND

### 1. Field of the invention

The present disclosure relates to a negative electrode active material for a lithium ion battery, a method of preparing the negative electrode active material, a negative electrode, and a lithium ion battery.

### 2. Description of the Related Art

As a silicon-based negative electrode having a high theoretical capacity of about 4,200 mAh/g replaces a conventional graphite-based negative electrode (about 360 mAh/g), silicon becomes an ideal negative electrode active material for next-generation high-energy-density lithium ion batteries. However, the silicon undergoes a much larger volume expansion (>300%) than the graphite during the alloying process with lithium ions, which is a significant limitation to its large-scale commercial application.

To provide a low-expansion silicon-carbon composite material by using a porous carbon material with a high pore volume, a high specific surface area, and high mechanical strength for silane deposition in conventional art, a hard carbon-based porous carbon material is prepared by directly obtaining a cured resin material or a pre-carbonized biomass material as a precursor and purifying and pore-forming the material before using it in the subsequent silane deposition. A hard carbon-based porous carbon material with an appropriate pore diameter, porosity, and specific surface area is a key factor in addressing excessive expansion of silicon-based negative electrodes. On the other hand, a high specific surface area may act as an effective deposition interface for amorphous silicon generated by thermal decomposition of the silane. But a pore structure may allow the deposited silicon to be uniformly distributed within the hard carbon-based porous carbon material and also to control the amorphous silicon to have a nanoscale effective size. Such a silicon-carbon composite material may effectively disperse excessive internal stress caused by the silicon expansion. In addition, because of the stable three-dimensional structure of the hard carbon, the material may limit macroscopic expansion of the silicon and improve conductivity.

However, the hard carbon has insufficient mechanical strength to maintain long-term cycling of the silicon-based negative electrodes, and silicon-doped cells may still experience a significant increase in direct current resistance (DCR) or a sharp drop (diving) in performance during the middle to late cycling. Also, the hard carbon does not have good electronic and ionic conductivity and thereby deteriorates overall output characteristics and rate performance of the cells after the silicon doping.

The information disclosed in this background section is provided solely to enhance understanding of the disclosure and may include information that does not constitute conventional or prior art.

## SUMMARY

Embodiments of the present disclosure provide a negative electrode active material for a lithium ion battery and a method of preparing the negative electrode active material, a negative electrode, and a lithium ion battery.

According to some example embodiments, a negative electrode active material for a lithium ion battery includes a silicon-carbon composite material that includes a first layer disposed at a center of the silicon-carbon composite material and including a hard carbon-based porous carbon material having silicon coated therein and a second layer coating on an outside of the first layer and including a two-dimensional nanomaterial including one or more of graphene, graphene oxide, MXene, molybdenum disulfide, and graphyne.

The silicon-carbon composite material may further include a third layer and a fourth layer laminated on the second layer in an outward direction from the center of the silicon-carbon composite material, the third layer may include a hard carbon-based porous carbon material having silicon coated therein, and the fourth layer includes a two-dimensional nanomaterial having a sheet diameter different from a sheet diameter of the two-dimensional nanomaterial of the second layer.

The silicon-carbon composite material may include a plurality of the third layer and a plurality of the fourth layer.

A sheet diameter of the two-dimensional nanomaterial of the fourth layer may be greater than a sheet diameter of the two-dimensional nanomaterial of the second layer, and the sheet diameter of the two-dimensional nanomaterial of the fourth layer that is farther from the center of the silicon-carbon composite material may be greater than the sheet diameter of the two-dimensional nanomaterial of the fourth layer that is closer to the center of the silicon-carbon composite material.

The sheet diameter of the two-dimensional nanomaterial of the fourth layer adjacent to the second layer may be about 5 to about 15 times the sheet diameter of the two-dimensional nanomaterial of the second layer, and the sheet diameter of the two-dimensional nanomaterial of the fourth layer that is farther from the center of the silicon-carbon

composite material may be about 5 to about 15 times the sheet diameter of the two-dimensional nanomaterial of the fourth layer that is closer to the center of the silicon-carbon composite material.

The silicon-carbon composite material may include two fourth layers.

The sheet diameter of the two-dimensional nanomaterial of the fourth layer that is farther from the center of the silicon-carbon composite material may be about 1 μm to about 10 μm, the sheet diameter of the two-dimensional nanomaterial of the fourth layer that is closer to the center of the silicon-carbon composite material may be about 100 nm to about 1 μm, and the sheet diameter of the two-dimensional nanomaterial of the second layer may be about 10 nm to about 100 nm.

An amount of the two-dimensional nanomaterial in the fourth layer adjacent to the second layer may be about 1.5 to about 3 times the amount of the two-dimensional nanomaterial in the second layer, and the amount of the two-dimensional nanomaterial in the fourth layer that is farther from the center of the silicon-carbon composite material may be about 1.5 to about 3 times the amount of the two-dimensional nanomaterial in the fourth layer that is closer to the center of the silicon-carbon composite material.

The first layer and the third layer may further include a conductive additive distributed in a hard carbon-based porous carbon material in a radial direction from the center of the silicon-carbon composite material, and the conductive additive may include one or more of a functionalized single-walled carbon nanotube, a functionalized multi-walled carbon nanotube, and a functionalized carbon nanofiber.

The functional group of the conductive additive may include one or more of a carboxyl group, a hydroxyl group, and an amino group, and an amount of the functional group may be about 0.1 wt% to about 5 wt% based on 100 wt% of the conductive additive.

The conductive additive may have a length of about 1 μm to about 50 μm and a diameter of about 0.5 nm to about 5 nm.

Based on 100 wt% of the silicon-carbon composite material, an amount of the hard carbon-based porous carbon material may be about 24 wt% to about 63 wt%, an amount of the two-dimensional nanomaterial may be about 0.15 wt% to about 7 wt%, an amount of the conductive additive may be 0.15 wt% to 7 wt%, and an amount of the silicon may be about 30 wt% to about 70 wt%.

The silicon-carbon composite material may be a spherical or quasi-spherical particle and may have a wrinkled surface.

The negative electrode active material may further include a carbon layer coating the outer surface of the silicon-carbon composite material, the thickness of the carbon layer may be about 1 nm to about 40 nm, and an amount of carbon in the carbon layer may be about 0.1 wt% to about 5 wt% based on 100 wt% of the negative electrode active material.

According to some example embodiments, a negative electrode includes the aforementioned negative electrode active material.

According to some example embodiments, a lithium ion battery includes: an electrode assembly including a positive electrode, a negative electrode, and a separator between the positive electrode and the negative electrode; and an electrolyte solution impregnated into the electrode assembly; wherein the negative electrode includes the negative electrode active material described above.

According to some example embodiments, a method of preparing a negative electrode active material for a lithium ion battery includes: mixing a two-dimensional nanomaterial including one or more of graphene, graphene oxide, MXene, molybdenum disulfide, and graphyne and a hard carbon source with a solvent to obtain a dispersion having a solids content of about 0.1 wt% to about 20 wt%; spray drying the dispersion to obtain particles of the hard carbon source coated with the two-dimensional nanomaterial, the particles having a particle size of about 5 μm to about 30 μm; activating the particles to form a hard carbon-based porous carbon material including pores from the hard carbon source; and depositing silane to dispose silicon with the pores of the hard carbon-based porous carbon material, thereby obtaining a silicon-carbon composite material.

The two-dimensional nanomaterial may include a first two-dimensional nanomaterial and a second two-dimensional nanomaterial having different sheet diameters, and the sheet diameter of the second two-dimensional nanomaterial may be about 5 to about 15 times the sheet diameter of the first two-dimensional nanomaterial.

The two-dimensional nanomaterial may include two-dimensional nanomaterials having three different sheet diameters, and the sheet diameter of the two-dimensional nanomaterial having a large sheet diameter may be about 1 μm to about 10 μm, the sheet diameter of the two-dimensional nanomaterial having a medium sheet diameter may be about 100 nm to about 1 μm, and the sheet diameter of the two-dimensional nanomaterial having a small sheet diameter may be about 10 nm to about 100 nm.

An amount of the two-dimensional nanomaterial of the large sheet diameter may be about 1.5 to about 3 times that of the two-dimensional nanomaterial of the medium sheet diameter, and an amount of the two-dimensional nanomaterial of the medium sheet diameter may be about 1.5 to about 3 times that of the two-dimensional nanomaterial of the small sheet diameter.

The hard carbon source may include one or more of an epoxy resin or an epoxy resin precursor, a phenol resin or

a phenol resin precursor, a furfuryl alcohol resin or a furfuryl alcohol resin precursor, glucose, chitosan, cellulose, lignin, starch, and pitch.

The method may further include: mixing a conductive additive with a dispersant to obtain a conductive additive dispersed body; and adding the conductive additive dispersed body to the dispersion; wherein the conductive additive may include one or more of a functionalized single-walled carbon nanotube, a functionalized multi-walled carbon nanotube, and a functionalized carbon nanofiber.

The negative electrode active material for a lithium ion battery and the method of preparing the negative electrode active material according to embodiments can solve the problems of low electronic/ionic conductivity and low mechanical strength of a hard carbon-based porous carbon material due to the high porosity of the hard carbon-based porous carbon material. Two-dimensional nanomaterials with relatively large sizes may have better electron mobility, thermal conductivity, and mechanical strength, while two-dimensional nanomaterials with small sizes may have better water solubility and dispersibility. Therefore, by utilizing the difference in capillary pressure that occurs during the evaporation and shrinkage of droplets during the spray drying process, two-dimensional nanomaterials may be wrinkled in three dimensions and two-dimensional nanomaterials of different sizes may be distributed in a gradient in a radial direction. In addition, large-sized two-dimensional nanomaterials are disposed in the outer layer to form a rigid outer shell layer with high strength, high conductivity, and high heat dissipation, and medium-sized two-dimensional nanomaterials and small-sized two-dimensional nanomaterials are dispersed inside to form a relatively flexible inner shell layer with low wrinkles. The rigid outer shell layer effectively limits the macroscopic volume expansion of the silicon-carbon composite material, and the flexible inner shell layer buffers the internal stress caused by the expansion and contraction of silicon during the lithiation/delithiation process, thereby preventing particle damage caused by the accumulation of internal stress. Further, the functional groups on the surface of the two-dimensional nanomaterial and the functionalized one-dimensional conductive additive form directional mutual attraction and connection, thereby forming a dense three-dimensional electron/ion transport network with high mixed conductivity, thereby further controlling the expansion of the silicon-based negative electrode, enhancing the structural stability of the material, and improving the kinetic performance and compression density.

## BRIEF DESCRIPTION OF THE DRAWINGS

FIG 1 shows the structure of a silicon-carbon composite material as a negative electrode active material for a lithium ion battery according to embodiments of the present disclosure.

FIG 2 shows a silicon-carbon composite material of a negative electrode active material according to embodiments of the present disclosure.

FIGS. 3A to 3D show processes of preparing a negative electrode active material of a lithium ion battery according to embodiments of the present disclosure.

FIG 4 shows a lithium ion battery according to embodiments of the present disclosure.

## DETAILED DESCRIPTION

To fully understand the configuration and effect of the present disclosure, some example embodiments will be described with reference to the attached drawings. However, the present disclosure is not limited to the following embodiments and may be implemented in various forms. The embodiments are provided merely to illustrate the present disclosure and to enable a person skilled in the art to fully understand the present disclosure.

As used herein, when an element is referred to be "on" or "over" another element, the element may be on or over the other element, or there may be intermediate elements therebetween. In the drawing, the thickness of some elements has been enlarged to effectively explain the technical content. The same reference numerals in the specification refer to the same elements throughout.

As used herein, when specific definition is not otherwise provided, expressions in singular form may also include expressions in plural form. And, unless otherwise stated, "A or B" may mean "A but not B", "B but not A", and "A and B."

As used herein, the term "comprising" as used herein includes and/or variations thereof and does not exclude the presence or addition of one or more other components.

As used herein, "combination thereof" may mean a mixture, a laminate, a composite, a copolymer, an alloy, a blend, a reaction product, and the like.

As used herein, when a definition is not otherwise provided, particle diameter may be an average particle diameter. In addition, the particle diameter refers to the average particle diameter ($D_{50}$), which means the diameter of particles with a cumulative volume of 50 vol% in the particle size distribution. The average particle diameter ($D_{50}$) may be measured by methods well known to those skilled in the art, for example, by using a particle size analyzer, or by using a

transmission electron microscope image or a scanning electron microscope image. Alternatively, a measurement device using dynamic light-scattering may be used to measure, data analysis may be performed to count the number of particles for each particle size range, and then the average particle diameter ($D_{50}$) may be calculated from this. Alternatively, the average particle diameter may be measured using the laser diffraction method. When measuring by laser diffraction, for example, after dispersing the particles to be measured in a dispersion medium, they are introduced into a commercially available laser diffraction particle size measuring device (e.g., Microtrac MT 3000) and irradiated with ultrasonic waves of approximately 28 kHz at an output of 60 W, and then the average particle size ($D_{50}$) based on 50% of the particle size distribution in the measuring device may be calculated.

When sheet diameter is used in this specification, sheet diameter means the transverse size (lateral size) of the material. For example, in the nanomaterials field, for two-dimensional nanomaterial sheets (that may have an irregular sheet-like 2D-shape) the sheet diameter is a common parameter defining the length of the longest axis of a sheet (e.g., length or width direction along the longest axis). The sheet diameter may be measured by measuring the length of the longest axis of a sheet using a scanning electron microscope image or transmission electron microscope image of the two-dimensional nanomaterial or the negative electrode active material. Two-dimensional nanomaterial sheets with specified sheet diameters are commercially available.

When the terms "about" or "substantially" are used in connection with a numerical value in this specification, it means that the relevant numerical value includes a tolerance of $\pm$10% of the stated numerical value. When specifying a range, that range includes all values in between (for example, if the increment is 0.1%).

Hard carbon material as used in this specification means a non-graphitizable carbon material having a disordered atomic structure that does not transition into a graphite structure even at high temperatures (e.g., 2000°C or higher).

Hard carbon materials, as a skeletal material for silane deposition, have the following problems. Because a large pore volume is required to accommodate amorphous silicon after silane decomposition, a large number of pore structures should be formed in the hard carbon material through physical or chemical activation, which causes reduces the structural strength of the hard carbon material. Hard carbon itself has an amorphous, short-range ordered structure, and has a small graphite microcrystalline structure and a large number of ultrafine gaps and defect structures, and thus its intrinsic electronic conductivity is two orders of magnitude lower than that of graphite materials. In addition, despite the interlayer spacing of hard carbon being greater than that of graphite and the intrinsic ionic conductivity is high, the abundant defects and developed pore structure make the lithium ion transport path of hard carbon materials very complex. This results in macroscopically low ionic conductivity, which ultimately reduces the electronic/ionic conductivity. Conventional methods for improving electronic/ionic conductivity may generally improve the particle surfaces, but it is difficult to improve the conductivity inside the particles. Improvement of internal conductivity is generally achieved by mixing single-dimensional particles or linear or sheet-shaped conductive materials or doping with other elements, but in these methods, it is difficult to solve a problem that the electron/ion transfer path inside the porous carbon is complicated and the two-phase interface of silicon/carbon is excessive, making ion/electron transfer difficult. Due to the various defects, ultrafine pore structure, and relatively large graphite layer spacing, the tap density of the porous hard carbon is low, which lowers the compression density of the final negative electrode, thereby affecting the energy density of the final battery.

In view of such problems with conventional hard carbon-based porous carbon materials, the present disclosure provides a negative electrode active material having high strength and high mixed conductivity, and a method of preparing the negative electrode active material.

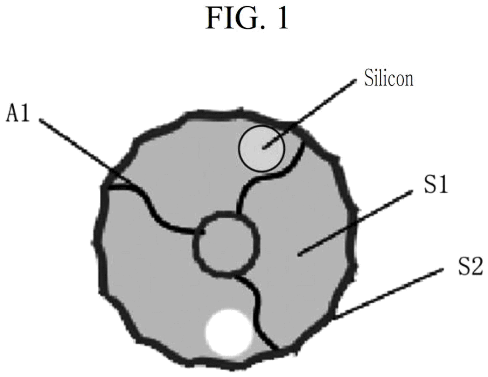

Hereinafter, the structure of a negative electrode active material for a lithium ion battery according to embodiments of the present disclosure will be described in detail with reference to FIG. 1.

A negative electrode active material for a lithium ion battery includes a silicon-carbon composite material. Referring to FIG. 1, the silicon-carbon composite material includes a first layer (or region) S1 disposed at the center of the silicon-carbon composite material that includes hard carbon-based porous carbon material having silicon coated therein. The silicon-carbon composite also includes a second layer S2 coating the first layer (or region) S1 on the outside of the first layer (or region) S1.

In some embodiments, the first layer (or region) S1 located at the center of the silicon-carbon composite material includes a hard carbon-based porous carbon material having silicon coated therein. The hard carbon source (or hard carbon precursor) of the hard carbon-based porous carbon material may include an epoxy resin or an epoxy resin precursor, a phenol resin or a phenol resin precursor, a furfuryl alcohol resin or a furfuryl alcohol resin precursor, glucose, chitosan, cellulose, lignin, starch, pitch, or a combination thereof. The epoxy resin precursor may include epichlorohydrin, bisphenol, polyol, or a combination thereof. The phenol resin precursor may include formaldehyde, phenol, resorcinol, bisphenol A, hexamethylenetetramine, or a combination thereof. However, the present disclosure is not limited to these examples, and the hard carbon source may form an epoxy resin or a phenol resin by including any suitable precursor material.

The second layer S2 coating the first layer S1 may include a two-dimensional nanomaterial, which may be expressed as a sheet-shaped two-dimensional nanomaterial. The two-dimensional nanomaterial may be a two-dimen-

sional high-strength, high-conductivity two-dimensional nanomaterial. In some example embodiments, the number of layers of the two-dimensional nanomaterial may be 1 to 10, for example 1 to 4, and the sheet diameter of the two-dimensional nanomaterial may be about 10 nm to about 10 μm.

The two-dimensional nanomaterial may include graphene, graphene oxide, MXene, molybdenum disulfide, graphyne, or a combination thereof. In specific examples, the two-dimensional nanomaterial may be graphene oxide. The graphene oxide used in the present disclosure may be made from flake graphite using a redox method. The carbon/oxygen (C/O) ratio of the graphene oxide may be about 0.5 to about 1.5, for example, about 0.8 to about 1.2, and the graphene oxide may be rich in functional groups containing oxygen.

In some embodiments, a hard carbon-based porous carbon material having silicon coated therein is further coated with a two-dimensional nanomaterial to improve structural strength and control volume expansion of silicon during charge and discharge processes. This structure improves rate performance or cycle stability (cycle-life characteristics) of the negative electrode active material and a battery including the negative electrode active material.

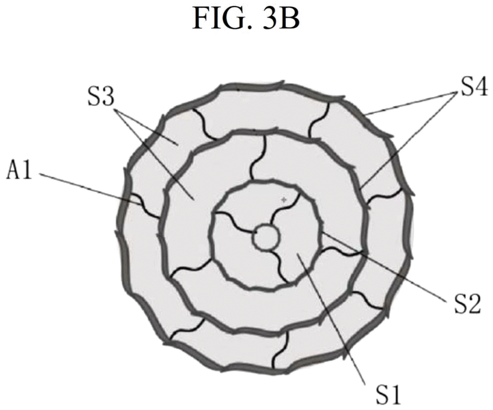

Referring to FIGS. 3B to 3D, the silicon-carbon composite material may include a third layer S3 and a fourth layer S4 alternately laminated on a second layer S2 in an outward direction from the center of the silicon-carbon composite material.

The third layer S3 may include the same material as the first layer S1. For example, the third layer S3 may include a hard carbon-based porous carbon material having silicon coated therein.

The fourth layer S4 may include a two-dimensional nanomaterial having a sheet diameter different from the sheet diameter of the two-dimensional nanomaterial of the second layer S2. The two-dimensional nanomaterial of the fourth layer S4 may include, for example, graphene, graphene oxide, MXene, molybdenum disulfide, graphene, or a combination thereof. The fourth layer S4 and the second layer S2 may differ only in the sheet diameter of the two-dimensional nanomaterial.

A plurality of both the third layer S3 and the fourth layer S4 may be provided. For example, the silicon-carbon composite material may include a plurality of third layers and a plurality of fourth layers. In the embodiment depicted in FIGS. 3B to 3D, two third layers S3 and two fourth layers S4 are illustrated, but the present disclosure is not limited to this example.

The sheet diameter of the two-dimensional nanomaterial of the fourth layer S4 may be greater than the sheet diameter of the two-dimensional nanomaterial of the second layer S2, and the sheet diameter of the two-dimensional nanomaterial of the fourth layer S4 from the center of the silicon-carbon composite material may be greater than the sheet diameter of the two-dimensional nanomaterial of the fourth layer S4 closer to the center of the silicon-carbon composite material. For example, a two-dimensional nanomaterial having a small sheet diameter may coat a hard carbon-based porous carbon material having silicon coated therein, another hard carbon-based porous carbon material having silicon coated therein may coat the two-dimensional nanomaterial having a small sheet diameter, and the outside may be coated by a two-dimensional nanomaterial having a large sheet diameter, thereby forming a silicon-carbon composite material in an nested form. With this configuration, the structural strength of the negative electrode active material may be improved, and the volume expansion of silicon during the charge/discharge process may be further controlled. The nested form may also be expressed as a multilayer coating structure.

To form a distinct nested structure (or gradient distribution structure) during the spray drying process, two-dimensional nanomaterials of different sheet diameters should have a difference of about one order of magnitude in their liquid diffusion coefficients. Because the liquid diffusion coefficient is generally inversely proportional to the square of the sheet diameter of the two-dimensional nanomaterial, the sheet diameter size should satisfy a certain ratio distribution. For example, a layer formed of a two-dimensional nanomaterial may have a sheet diameter of the two-dimensional nanomaterial that increases the farther away from the center of the silicon-carbon composite material. For example, the sheet diameter (i.e., the middle sheet diameter) of the two-dimensional nanomaterial of the fourth layer S4 adjacent to the second layer S2 may be about 5 to about 15 times, for example, about 8 to about 12 times, about 9 to about 11 times, or about 10 times the sheet diameter (i.e., the small sheet diameter) of the two-dimensional nanomaterial of the second layer S2. The sheet diameter of the two-dimensional nanomaterial of the fourth layer S4 far from the center of the silicon-carbon composite material (i.e., large sheet diameter) may be about 5 to about 15 times, for example about 8 to about 12 times, about 9 to about 11 times, or about 10 times the sheet diameter of the two-dimensional nanomaterial of the fourth layer S4 close to the center of the silicon-carbon composite material, i.e., middle sheet diameter.

When the sheet diameter ratio of the two-dimensional nanomaterials in each layer is less than about 5, a difference between the sheet diameters is too small to form two-dimensional nanomaterials with distinct size differences overlapping and distributed in the radial direction so that the macroscopic volume expansion of the composite silicon-carbon material cannot be effectively controlled while buffering the huge internal stress, which results in low cycle stability of the particle structure. When the sheet diameter of the two-dimensional nanomaterial in each layer exceeds about 15 times, the difference between the sheet diameters may be too large and may exceed the preparing process capability of the current level of two-dimensional nanomaterial. Even if it is possible to prepare the nanomaterial, when the difference in sheet diameters is too large, the two-dimensional nanomaterials with large sheet diameters are too large to be suitable for

the spray drying process, resulting in clogging or particle anisotropy. Or the two-dimensional nanomaterials with small sheet diameters are too small to have a two-dimensional sheet-like structure of sufficient size, and, thus, cannot be converted into three-dimensional wrinkled spherical shells through the spray process.

Referring to FIGS. 3B to 3D, the silicon-carbon composite material may include two fourth layers. The sheet diameter of the two-dimensional nanomaterial of the fourth layer S4 from the center of the silicon-carbon composite material (i.e., large sheet diameter) may be about 1 μm to about 10 μm, or 5 μm to 7 μm. The sheet diameter of the two-dimensional nanomaterial of the fourth layer S4 close to the center of the silicon-carbon composite material (i.e., middle sheet diameter) may be about 100 nm to about 1 μm, or about 500 nm to about 700 nm. And the sheet diameter of the two-dimensional nanomaterial of the second layer S2 (i.e., small sheet diameter) may be about 10 nm to about 100 nm, or about 50 nm to about 70 nm.

In some embodiments, the two-dimensional nanomaterial may have a weight ratio relationship (basic proportional relationship) of two-dimensional nanomaterial having large sheet diameter being greater than two-dimensional nanomaterial having medium sheet diameter being greater than two-dimensional nanomaterial having small sheet diameter. For example, the further away from the center of a silicon-carbon composite material, the greater the amount of the two-dimensional nanomaterial in the layer formed by the two-dimensional nanomaterial. The amount of the two-dimensional nanomaterial (i.e., the two-dimensional nanomaterial having a medium sheet diameter) in the fourth layer S4 adjacent to the second layer S2 may be about 1.5 to about 3 times, or about 2 times the amount of the two-dimensional nanomaterial (i.e., the two-dimensional nanomaterial having a small sheet diameter) in the second layer S2,. The amount of the two-dimensional nanomaterial (i.e., the two-dimensional nanomaterial having a large sheet diameter) in the fourth layer S4 far from the center of the silicon-carbon composite material may be about 1.5 to about 3 times, or 2 times the amount of the two-dimensional nanomaterial (i.e., the two-dimensional nanomaterial having a medium sheet diameter) in the fourth layer S4 close to the center of the silicon-carbon composite material.

For spherical structures, the closer to the surface (larger radius), the larger the surface area and, thus, more two-dimensional nanomaterials are required to form a complete nested spherical shell. Thus, when the weight ratio of the two-dimensional nanomaterials in each layer is less than about 1.5 times, the number of two-dimensional nanomaterials with large sheet diameters distributed near the surface may be small, making it difficult to form a sufficiently dense and strong outer spherical shell. When the weight ratio of the two-dimensional nanomaterials in each layer is more than three times, in the inner layer of the two-dimensional nanomaterials, two-dimensional nanomaterials with small sheet diameters may be insufficient, making it impossible to form an effective inner nested structure.

The first layer S1 and the third layer S3 may further include a conductive additive A1 distributed radially in the hard carbon-based porous carbon material from the center of the silicon-carbon composite material.

The conductive additive A1 may be a one-dimensional, high-conductivity, high-flexibility conductive additive. In some embodiments, the conductive additive A1 may be functionalized or modified, for example, the conductive additive A1 may include a functionalized single-walled carbon nanotube, a functionalized few-walled carbon nanotube, a functionalized multi-walled carbon nanotube, a functionalized carbon nanofiber, or a combination thereof. In a specific example, the conductive additive A1 includes functionalized single-walled carbon nanotubes.

The functional group modifying the conductive additive may include a carboxyl group, a hydroxyl group, an amino group, or a combination thereof. Based on 100 wt% of the conductive additive A1, the amount of the functional group may be about 0.1 wt% to about 5 wt%, about 0.5 wt% to about 4.5 wt%, about 1 wt% to about 4 wt%, about 1.5 wt% to about 3.5 wt%, or about 2 wt% to about 3 wt%.

The length of the conductive additive A1 may be about 1 μm to about 50 μm, for example, about 5 μm to about 20 μm. The diameter of the conductive additive A1 may be about 0.5 nm to about 5 nm, for example, about 1 nm to about 2 nm. Here, the length of the conductive additive A1 means the length of the major axis passing through the center of the unit of the conductive additive A1, and the diameter of the conductive additive A1 means the length of the minor axis passing through the center of the unit of the conductive additive A1 and perpendicular to the major axis of the conductive additive A1. The length and/or diameter of the conductive additive A1 may be measured, for example, using a transmission electron microscope image or a scanning electron microscope image of the conductive additive A1 or the negative electrode active material.

In some embodiments, the length of the conductive additive A1 may be about 1 μm to about 50 μm, about 3 μm to about 50 μm, about 5 μm to about 50 μm, about 2 μm to about 48 μm, about 4 μm to about 46 μm, about 6 μm to about 44 μm, about 8 μm to about 42 μm, about 10 μm to about 40 μm, about 12 μm to about 38 μm, about 14 μm to about 36 μm, about 16 μm to about 34 μm, about 18 μm to about 32 μm, about 20 μm to about 30 μm, about 22 μm to about 28 μm, or about 24 μm to about 26 μm. The diameter of the conductive additive A1 may be about 0.5 nm to about 5 nm, about 1 nm to about 5 nm, about 1.5 nm to about 4.5 nm, about 2 nm to about 4 nm, about 2.5 nm to about 3.5 nm, or about 1 nm to about 2 nm. When the length and diameter of the conductive additive A1 are in the above ranges, the conductive additive A1 is distributed in the hard carbon-based porous carbon material in the radial direction from the center of the silicon-carbon composite material between the two-dimensional nanomaterials so that the two-dimensional nanomaterials inside are overlapped layer by layer, the hard carbon-based porous carbon material is filled between the layers formed by the two-

dimensional nanomaterials, and the one-dimensional linear conductive additive may form a three-dimensional network structure in which the hard carbon-based porous carbon material is network-crosslinked.

Based on 100 wt% of the silicon-carbon composite material, the amount of the hard carbon-based porous carbon material may be about 24 wt% to about 63 wt%, the amount of the two-dimensional nanomaterial may be about 0.15 wt% to about 7 wt%, the amount of the conductive additive may be in the range of about 0.15 wt% to about 7 wt%, and the amount of silicon may be about 30 wt% to about 70 wt%. When the amounts of the hard carbon-based porous carbon material, silicon, two-dimensional nanomaterial, and conductive additive are in these ranges, an excellent three-dimensional network structure may be effectively obtained.

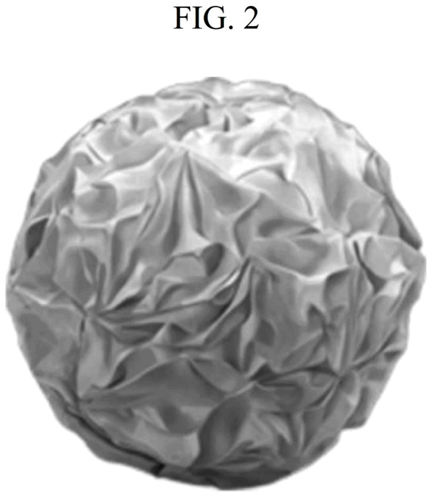

Referring to FIG. 2, the silicon-carbon composite material may be a spherical or quasi-spherical particle with a wrinkled surface.

In some example embodiments, the negative electrode active material may further include a carbon layer coating the outer surface of the silicon-carbon composite material.

A thickness of the carbon layer coating the outer surface of the silicon-carbon composite material may be from about 1 nm to about 40 nm, for example from about 4 nm to about 10 nm. Based on 100 wt% of the negative electrode active material, the carbon amount in the carbon layer may be about 0.1 wt% to about 5 wt%. When the thickness of the carbon layer and the amount of carbon within the carbon layer are in the above ranges, exposure of silicon may be effectively prevented. The thickness of the carbon layer may be measured, for example, using a scanning electron microscope image or a transmission electron microscope image of the negative electrode active material.

In embodiments of the present disclosure, a three-dimensional network structure formed through the synergistic action of a one-dimensional conductive additive and a two-dimensional nanomaterial may significantly improve the conductivity and mechanical strength of the negative electrode active material. The three-dimensional network structure may also improve the rate performance and cycle stability of a lithium ion battery.

Hereinafter, a method of preparing a negative electrode active material for a lithium ion battery of the present disclosure will be described in detail with reference to example embodiments.

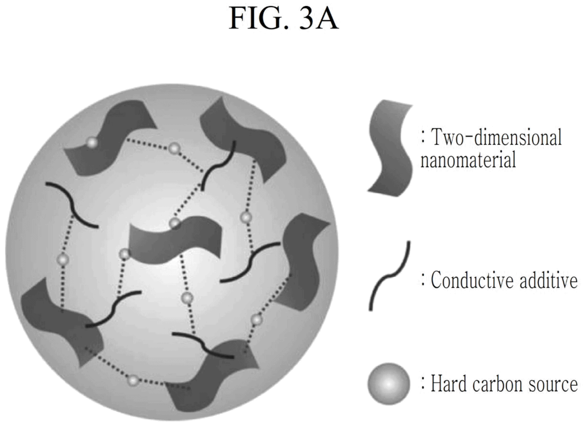

FIGS. 3A to 3D are schematic views of processes of preparing a negative electrode active material of a lithium ion battery.

A method of preparing a negative electrode active material for a lithium ion battery according to some example embodiments includes: mixing a hard carbon source and a two-dimensional nanomaterial with a solvent to obtain a dispersion; spray drying the dispersion to obtain particles in which the hard carbon source is coated with the two-dimensional nanomaterial; activating the particles to form a hard carbon-based porous carbon material including a plurality of pores from the hard carbon source; and depositing silane to dispose silicon within the plurality of pores of the hard carbon-based porous carbon material to obtain a silicon-carbon composite material.

In the step of mixing the hard carbon source and the two-dimensional nanomaterial with the solvent, the hard carbon source may include an epoxy resin or an epoxy resin precursor, a phenol resin or a phenol resin precursor, a furfuryl alcohol resin or a furfuryl alcohol resin precursor (e.g., polyfurfuryl alcohol or a polyfurfuryl alcohol precursor), glucose, chitosan, cellulose, lignin, starch, pitch, or a combination thereof. The epoxy resin precursor may include epichlorohydrin, bisphenol, polyol, or a combination thereof. The phenol resin precursor may include formaldehyde, phenol, resorcinol, bisphenol A, hexamethylenetetramine, or a combination thereof. However, the present disclosure is not limited to these examples, and may an epoxy resin or a phenol resin may be formed by including any suitable precursor material.

The two-dimensional nanomaterial may be high-strength, high-conductivity two-dimensional nanomaterials. For example, the two-dimensional nanomaterial may include graphene, graphene oxide, MXene, molybdenum disulfide, graphyne, or a combination thereof. The two-dimensional nanomaterial may include a first two-dimensional nanomaterial and a second two-dimensional nanomaterial having different sheet diameters, and the sheet diameter of the second two-dimensional nanomaterial may be about 5 to about 15 times the sheet diameter of the first two-dimensional nanomaterial. The amount of the second two-dimensional nanomaterial having a large sheet diameter may be about 1.5 to about 3 times the amount of the first two-dimensional nanomaterial having a small sheet diameter.

The two-dimensional nanomaterial may include two-dimensional nanomaterials having three different sheet diameters. In some examples, the sheet diameter of the two-dimensional nanomaterial having a large sheet diameter (e.g., within the fourth layer far from the center of the silicon-carbon composite material) may be about 1 $\mu$m to about 10 $\mu$m, the sheet diameter of the two-dimensional nanomaterial having a medium sheet diameter (e.g., within the fourth layer close to the center of the silicon-carbon composite material) may be about 100 nm to about 1 $\mu$m, and the sheet diameter of the two-dimensional nanomaterial having a small sheet diameter (e.g., within the second layer) may be about 10 nm to about 100 nm. An amount of the two-dimensional nanomaterial of the large sheet diameter may be about 1.5 to about 3 times an amount of the two-dimensional nanomaterial of the medium sheet diameter, and an amount of the two-dimensional nanomaterial of the medium sheet diameter may be about 1.5 to about 3 times an amount of the two-dimensional nanomaterial of the small sheet diameter.

The solvent may include water, an alkaline solution, an acid solution, ethanol, isopropanol, or a combination thereof. But the present disclosure is not limited to these examples.

By mixing the hard carbon source and the two-dimensional nanomaterial with a solvent, a dispersion having a solids content of about 0.1 wt% to about 20 wt% may be obtained. For example, a dispersion having a solid content of about 0.1 wt% to about 15 wt%, about 0.5 wt% to about 15 wt%, about 1 wt% to about 14 wt%, about 2 wt% to about 13 wt%, about 3 wt% to about 12 wt%, about 4 wt% to about 11 wt%, about 5 wt% to about 10 wt%, about 6 wt% to about 9 wt%, or about 7 wt% to about 8 wt% may be obtained.

The method may further include mixing a conductive additive with a dispersing agent to obtain a conductive additive dispersed body and adding the conductive additive dispersed body to the dispersion. The conductive additive dispersed body may be expressed as a conductive additive dispersion. The conductive additive is the same as described above. The dispersant may be an aqueous solution of carboxymethyl cellulose (CMC), but the present disclosure is not limited thereto.

In the step of spray drying the dispersion, spray drying may be performed at about 150 °C to about 250 °C, the rotation speed of the sprayer used may be about 15,000 r/min to about 30,000 r/min, and the spray flow rate may be about 6 L/h to about 14 L/h. Particles comprising a hard carbon source coated with a two-dimensional nanomaterial are obtained, and the average particle diameter of the particles may be about 5 $\mu$m to about 30 $\mu$m. Referring to FIG 3A, because there is a directional mutual attraction between the functional group-modified one-dimensional conductive additive and the functional groups of the hard carbon source and the two-dimensional nanomaterial, a denser three-dimensional network structure may be formed during the subsequent shrinkage process. As the solvent droplets continuously evaporate and shrink during the spray drying process, the volume of the spray droplets continues to decrease, which generates capillary pressure and may have different liquid diffusion coefficients and surface energies. As such, the two-dimensional nanomaterial exhibits a concentration gradient distribution from the outside to the inside in the radial direction as its size decreases, and some of the two-dimensional nanomaterial is gradually crushed by the capillary pressure and some of the two-dimensional nanomaterial overlaps, forming a wrinkled spherical shell. The hard carbon source is precipitated during the crosslinking and curing process of the thermal spraying process and filled between the layers of the two-dimensional nanomaterials. Finally, two-dimensional nanomaterials of different sizes are overlapped and connected by a one-dimensional conductive additive, and a spherical structure such as that shown in FIG. 3B filled with the hard carbon precursor may be formed.

Depending on the size distribution of the two-dimensional nanomaterial, the size of the spray droplets of the spray drying, and the concentration of the spray dispersion, the particles may include one layer or more layers of two-dimensional nanomaterials, for example, a layer formed of three layers or more layers of two-dimensional nanomaterials. In the example depicted in FIG. 3B, the particle includes three layers of two-dimensional nanomaterials, wherein the hard carbon, the two-dimensional nanomaterials, and the conductive additives regularly exhibit a gradient distribution structure in the radial direction of the particle, and the two-dimensional nanomaterials in the form of sheets (e.g., reduced graphene oxide sheets) are interlocked with each other in a wrinkled form, and the region between the layers formed of the two-dimensional nanomaterials is filled with the hard carbon material. In such a case, the layer formed of two-dimensional nanomaterials may prevent the structure from collapsing due to mutual attraction caused by van der Waals forces. A conductive additive with a high aspect ratio may form a spider web-like network structure as it is distributed inside the hard carbon material, penetrating the hard carbon material and connecting to a layer formed of a two-dimensional nanomaterial.

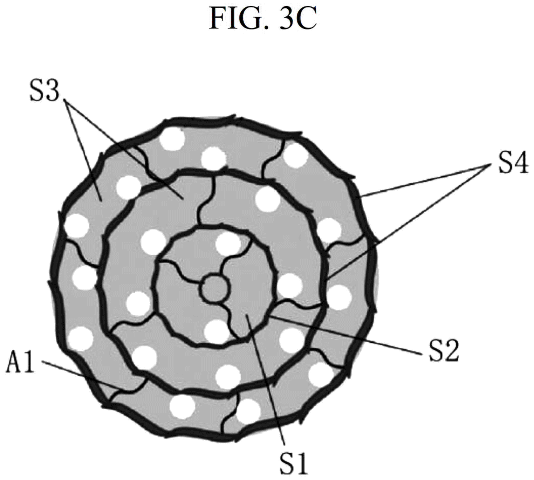

In the particle activation (carbonization and/or pore formation, such as first carbonization followed by pore formation) step, the particles are activated using an activator at a temperature of about 500 °C to about 1,000 °C for about 2 hours to about 10 hours. Thus, a hard carbon-based porous carbon material including a plurality of pores is obtained. Referring to FIG 3C, after activating the particles, some of the hard carbon source is etched by the activator to form many pores uniformly distributed inside the particles, which may be used for deposition of amorphous silicon produced through subsequent high-temperature pyrolysis.

The activator may include, for example, potassium hydroxide, sodium hydroxide, steam, carbon dioxide, or a combination thereof. But the present disclosure is not limited to these examples. When using an alkaline solution activator such as potassium hydroxide, a weight ratio of the activated particles to the activator may be about 1:0.5 to about 1:3, and when using a gaseous activator such as water vapor, a ratio of the gas flow rate of the activator to the weight of the activated particles may be about 1 L/min(kg) to about 10 L/min(kg).

An average pore diameter of the hard carbon-based porous carbon material may be about 0.5 nm to about 4 nm, a specific surface area may be about 1,200 $m^2/g$ to about 3,000 $m^2/g$, a pore volume may be about 0.4 $cm^3/g$ to about 1.2 $cm^3/g$, and a proportion of micropores may be about 50% to about 98%. These pore parameters may be measured by standard $N_2$-BET adsorption method, $N_2$-BJH (Barret-Joyner-Halenda) adsorption method, $N_2$-NLDFT (Non-Local Density Functional Theory) adsorption method, or a combination thereof.

In the silane deposition step, silane decomposition deposition may be performed at a temperature of about 500 °C to about 700 °C using a mixed gas of silane/inert gas of about 10 wt% to about 50 wt% (silane amount ranges from about 10 wt% to about 50 wt%) through a chemical vapor deposition (CVD) method. A ratio of the flow rate of the mixed gas to the weight of the injected composite porous carbon (hard carbon-based porous carbon material) may be about 4 L/min(kg) to

about 8 L/min(kg), and a deposition time may be about 3 hours to about 7 hours.

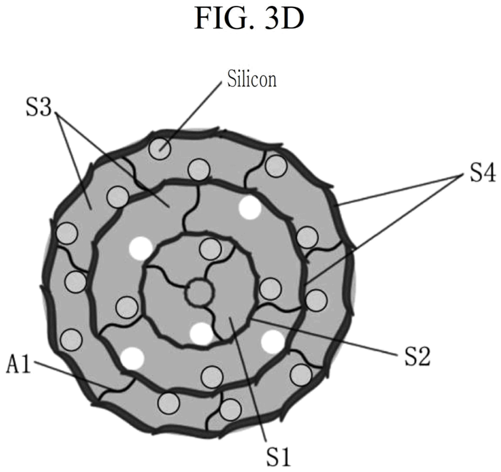

Referring to FIG 3D, amorphous silicon may be introduced into the internal pores of a hard carbon-based porous carbon material through CVD silane deposition. As such, most of the pores are filled with silicon while leaving some unfilled pores to serve as buffer space to accommodate changes in the volume of silicon during charge and discharge processes.

The pore volume utilization ratio of the silicon-carbon composite material after silane deposition may be about 30 v/v% to about 80 v/v%. An amount of silicon deposition on the outer surface of the silicon-carbon composite material may be less than about 0.5 wt%.

In some embodiments, the method may further include performing carbon coating on the outer surface of the silicon-carbon composite material to obtain a negative electrode active material coated with a carbon layer on the silicon-carbon composite material.

In carbon coating on the outer surface of the silicon-carbon composite material, a protective gas (e.g., an inert gas) may be introduced while simultaneously introducing a carbon source gas. A CVD surface carbon coating may be performed by maintaining a constant temperature of about 600 °C to about 800 °C for about 2 hours to about 4 hours to thereby obtain a negative electrode active material.

In some embodiments, the carbon source gas may include methane, acetylene, or a combination thereof.

A thickness of the carbon layer may be about 1 nm to about 40 nm. Based on 100 wt% of the negative electrode active material, the carbon content in the carbon layer may be about 0.1 wt% to about 5 wt%.

The conductivity of the negative electrode active material may be improved by introducing a highly conductive additive having a linear and planar structure such as functionalized single-walled carbon nanotube and a two-dimensional nanomaterial such as reduced graphene oxide.

By enhancing a degree of crosslinking through strong interactions between graphene oxide rich in oxygen-containing functional groups, carbon nanotubes graphitized with functional groups, and a hard carbon source, a more dense and mechanically strong negative electrode active material may be obtained. Further, the crushing strength of the negative electrode active material may be improved by using high-strength reduced graphene oxide and carbon nanotubes.

## Rechargeable Lithium Battery

According to some embodiments, a lithium ion battery includes an electrode assembly and an electrolyte solution impregnated into the electrode assembly. The electrode assembly includes a positive electrode, a negative electrode, and a separator therebetween. that is, the rechargeable lithium battery may include an electrode assembly and an electrolyte solution impregnated into the electrode assembly, and the electrode assembly may include a positive electrode, a negative electrode, and a separator therebetween.

## Positive Electrode

The positive electrode may include a positive electrode current collector and a positive electrode active material layer on the positive electrode current collector. The positive electrode active material layer may include a positive electrode active material and may further include a binder and/or a conductive material.

The positive electrode active material may be a composite oxide of lithium and metals such as cobalt, manganese, nickel, or a combination thereof. Specific examples are represented by the following chemical formulas: $Li_aA_{1-b}R_bD_2$ ($0.90 \le a \le 1.8$, $0 \le b \le 0.5$); $Li_aE_{1-b}R_bO_{2-c}D_c$ ($0.90 \le a \le 1.8$, $0 \le b \le 0.5$, $0 \le c \le 0.05$); $LiE_{2-b}R_bO_{4-c}D_c$ ($0 \le b \le 0.5$, $0 \le c \le 0.05$); $Li_aNi_{1-b-c}Co_bR_cO_\alpha$ ($0.90 \le a \le 1.8$, $0 \le b \le 0.5$, $0 \le c \le 0.05$, $0 < \alpha \le 2$); $Li_aNi_{1-b-c}CO_bR_cO_{2-\alpha}Z_\alpha$ ($0.90 \le a \le 1.8$, $0 \le b \le 0.5$, $0 \le c \le 0.05$, $0 < \alpha < 2$); $Li_aNi_{1-b-c}Co_bR_cO_{2-\alpha}Z_2$ ($0.90 \le a \le 1.8$, $0 \le b \le 0.5$, $0 \le c \le 0.05$, $0 < \alpha < 2$); $Li_aNi_{1-b-c}Mn_bR_cD_\alpha$ ($0.90 \le a \le 1.8$, $0 \le b \le 0.5$, $0 \le c \le 0.05$, $0 < \alpha \le 2$); $Li_aNi_{1-b-c}Mn_bR_cO_{2-\alpha}Z_\alpha$ ($0.90 \le a \le 1.8$, $0 \le b \le 0.5$, $0 \le c \le 0.05$, $0 < \alpha < 2$); $Li_aNi_{1-b-c}Mn_bR_cO_{2-\alpha}Z_2$ ($0.90 \le a \le 1.8$, $0 \le b \le 0.5$, $0 \le c \le 0.05$, $0 < \alpha < 2$); $Li_aNi_bE_cG_dO_2$ ($0.90 \le a \le 1.8$, $0 \le b \le 0.9$, $0 \le c \le 0.5$, $0.001 \le d \le 0.1$); $Li_aNi_bCo_cMn_dGeO_2$ ($0.90 \le a \le 1.8$, $0 \le b \le 0.9$, $0 \le c \le 0.5$, $0 \le d \le 0.5$, $0.001 \le e \le 0.1$); $Li_aNiG_bO_2$ ($0.90 \le a \le 1.8$, $0.001 \le b \le 0.1$); $Li_aCoG_bO_2$ ($0.90 \le a \le 1.8$, $0.001 \le b \le 0.1$); $Li_aMnG_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $QO_2$; $QS_2$; $LiOS_2$; $V_2O_5$; $LiV_2O_5$; $LiTO_2$; $LiNiVO_4$; $Li_{(3-f)}J_2(PO_4)_3$ ($0 \le f \le 2$); $Li_{(3-f)}Fe_2(PO_4)_3$ ($0 \le f \le 2$); and $LiFePO_4$. In these chemical formulas, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

Based on 100 wt% of the positive electrode active material layer, an amount of the positive electrode active material may be about 90 wt% to about 99.5 wt%. Based on 100 wt% of the positive electrode active material layer, the amount of the binder may be about 0 wt% to about 5 wt% or 0.5 wt% to about 5 wt%, and the amount of the conductive material may be about 0 wt% to about 5 wt% or about 0.5 wt% to about 5 wt%.

The binder may attach the positive electrode active material particles to each other and attach the positive

electrode active material to the positive electrode current collector. The binder may include, for example, a polymer including polyvinyl alcohol, carboxymethyl cellulose, hydroxypropyl cellulose, diacetyl cellulose, polyvinyl chloride, carboxylated polyvinyl chloride, polyvinyl fluoride, ethylene oxide, polyvinylpyrrolidone, polyurethane, polytetrafluoroethylene, polyvinylidene fluoride (PVDF), polyethylene, polypropylene, a styrene-butadiene rubber, a (meth)acrylated styrene-butadiene rubber, an epoxy resin, (meth)acrylic resin, polyester resin, nylon, a nitrile rubber (e.g., BM-720H), or a combination thereof.

The conductive material may provide conductivity (e.g., electrical conductivity) to the electrode. A conductive material can include any material that conducts electrons without causing an undesirable chemical change in a rechargeable lithium battery. Examples of the conductive material include a carbon-based material including natural graphite, artificial graphite, carbon black, acetylene black, Ketjen black, a carbon fiber, a carbon nanofiber, a carbon nanotube (CNT), or a combination thereof; a metal-based material including at least one of copper, nickel, aluminum, silver, etc., in a form of metal powder or metal fiber; a conductive polymer such as a polyphenylene derivative; or a mixture thereof.

## Negative Electrode

The negative electrode may include a negative electrode current collector and a negative electrode active material layer on the negative electrode current collector. The negative electrode active material layer may include a negative electrode active material and may further include a binder and/or a conductive material (e.g., an electrically conductive material). Here, the negative electrode active material may be the negative electrode active material described above.

Based on 100 wt% of the negative electrode active material layer, the negative electrode active material layer may include about 89 wt% to about 99 wt% of the negative electrode active material, about 1 wt% to about 10 wt% of the binder, and about 0 wt% to about 5 wt% of the conductive material.

The binder may attach the negative electrode active material particles to each other and may attach the negative electrode active material to the negative electrode current collector. The binder may include, for example, at least one of polyvinyl alcohol, carboxymethyl cellulose, hydroxypropyl cellulose, (meth)acrylic acid, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene (PTFE), polyvinylidene fluoride (PVDF), polyamideimide, polyimide (PI), polyethylene, polypropylene, a styrene butadiene rubber, a nitrile rubber (NBR), a (meth)acrylated styrene-butadiene rubber, an epoxy resin, a (meth)acrylic resin, a polyester resin, and nylon 20.

The conductive material can impart conductivity to an electrode. Any conductive material that conducts electrons without causing unwanted chemical changes in rechargeable lithium batteries may be used as a conductive material. The conductive material may include, for example, a carbon material such as natural graphite, artificial graphite, carbon black, acetylene black, graphene, Super P, Ketjen black, a carbon fiber, a carbon nanofiber, a carbon nanotube, or a combination thereof; a metal material including at least one of copper, nickel, aluminum, silver, etc. in a form of a metal powder or a metal fiber; a conductive polymer such as a polyphenylene derivative; or a mixture thereof.

The negative electrode current collector may include a copper foil, a nickel foil, a stainless steel foil, titanium foil, a nickel foam, a copper foam, a polymer substrate coated with a conductive metal, or a combination thereof.

## Separator

Depending on the type of lithium-ion battery, a separator may be present between the positive and negative electrodes. The separator may include at least one of polyethylene, polypropylene, and polyvinylidene fluoride, or a multilayer film including two or more layers thereof, a two-layer separator of polyethylene/polypropylene, a three-layer separator of polyethylene/polypropylene/polyethylene, a three-layer separator of polypropylene/polyethylene/polypropylene, and the like, and a mixed multilayer film.

The separator may include a porous substrate and a coating layer disposed on one or both surfaces of the porous substrate and including an organic material, an inorganic material, or a combination thereof.

The porous substrate may be or may include a polymer film. The polymer film may be made of any one or more of a polymer, a copolymer, or a mixture thereof, or may include any one or more of a polymer, a copolymer, or a mixture thereof: polyolefins (e.g., polyethylene or polypropylene), polyesters (e.g., polyethylene terephthalate or polybutylene terephthalate), polyacetals, polyamides, polyimides, polycarbonates, polyetherketones, polyaryletherketones, polyetherimides, polyamideimides, polybenzimidazoles, polyethersulfones, polyphenyleneoxides, cyclic olefin copolymers, polyphenylene sulfides, polyethylene naphthalate, glass fibers, and TEFLON® (polytetrafluoroethylene).

The organic material may include a polyvinylidene fluoride polymer or a (meth)acrylic polymer.

The inorganic material may include inorganic particles, which may include $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof. But the present disclosure is not limited to these disclosure.

The organic and inorganic materials may be mixed in one coating layer. In other embodiments, a coating layer including an organic material and a coating layer including an inorganic material may be stacked.

## Electrolyte Solution

The lithium ion battery may further include an electrolyte solution. The electrolyte solution may include a non-aqueous organic solvent and a lithium salt.

The non-aqueous organic solvent may be configured to serve as a medium through which ions involved in the electrochemical reaction of the battery move. The non-aqueous organic solvent may be or include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), fluoroethylene carbonate (FEC), vinylene carbonate (VC), or a combination thereof.

The ester-based solvent may include at least one of methyl acetate, ethyl acetate, n-propyl acetate, t-butyl acetate, methyl propionate, ethyl propionate, decanolide, mevalolactone, valerolactone, caprolactone, and 1,3-propanesulfonate lactone.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. Additionally, the ketone-based solvent may include cyclohexanone, and the like. The alcohol-based solvent may include at least one of ethanol, isopropanol, and the like, and the aprotic solvent may include at least one of nitriles such as R-CN (wherein R is a linear, branched, or cyclic hydrocarbon group having 2 to 20 carbon atoms and includes a double bond, an aromatic ring, or an ether bond, and the like); amides such as dimethylformamide; dioxolanes such as 1,3-dioxolane and 1,4-dioxolane; and sulfolanes.

The non-aqueous organic solvent may be included alone or a combination of two or more solvents may be included.

In addition, when using the carbonate-based solvent, a cyclic carbonate and a chain carbonate may be mixed and used. The cyclic carbonate and the chain carbonate may be mixed in a volume ratio of about 1:1 to about 1:9.

The lithium salt dissolved in the organic solvent is configured to supply lithium ions to the battery, thereby enabling the basic operation of the lithium ion battery and improving the transfer of lithium ions between the positive and negative electrodes. Examples of the lithium salt include $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_2C_2F_5)_2$, $Li(FSO_2)_2N$ (lithium bis(fluorosulfonyl)imide, LiFSI), $LiC_4F_9SO_3$, $LiN(CxF_{2x+1}SO_2)(C_yF_{2y+1}SO_2)$ (x and y are integers from 1 to 20), lithium trifluoromethanesulfonate, lithium tetrafluoroethanesulfonate, lithium difluorobis(oxalato)phosphate (LiDFBOP), lithium difluorobis(oxalato)borate (LiDFBOB), lithium bis(oxalato)borate (LiBOB), or a combination thereof.

The lithium ion battery may be cylindrical, prismatic, pouch-shaped, or coin-shaped batteries depending on its shape. Hereinafter, a cylindrical lithium ion battery is described as an example.

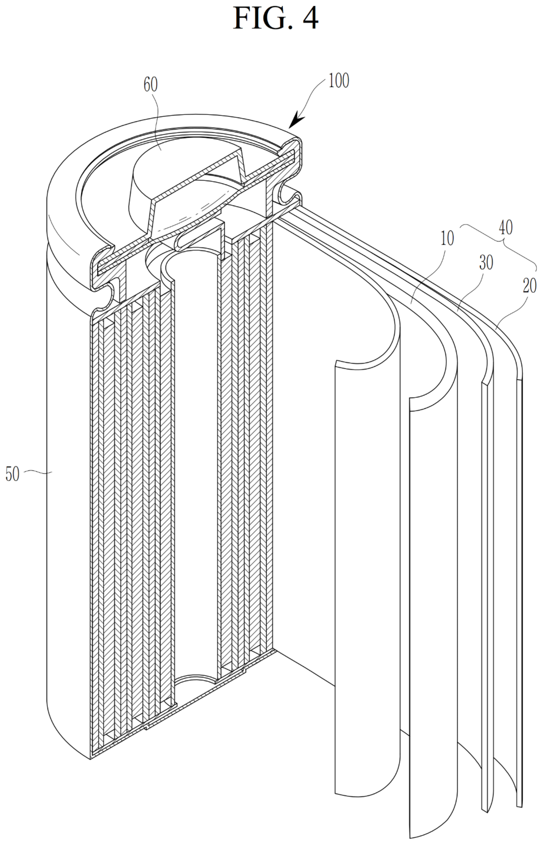

FIG 4 is a schematic view of a cylindrical rechargeable lithium battery according to embodiments of the present disclosure. Referring to FIG. 4, a cylindrical rechargeable lithium battery 100 may include an electrode assembly 40 including a separator 30 between a positive electrode 10 and a negative electrode 20 and a case 50. The positive electrode 10, negative electrode 20 and separator 30 may be impregnated with an electrolyte (not shown). As shown in FIG. 4, the rechargeable lithium battery 100 may include a sealing member (60) that seals the case 50.

Hereinafter, a lithium ion battery and a method of manufacturing a lithium ion battery according to some example embodiments are described by specific examples.

## Preparing of Negative Electrode Active Materials

### Preparation Example 1

Step 1: 98 wt% of concentrated sulfuric acid and 70% of concentrated nitric acid were mixed in a volume ratio of 3:1 to obtain an acidic mixture. Single-walled carbon nanotube powder with a diameter of 2 nm and a length of 1 μm was dispersed in the acidic mixture and then concentrated under reflux at 80 °C for 4 hours, cooled, filtered, and washed with distilled water until neutral to obtain carboxylated single-walled carbon nanotubes. A carboxyl group was 2.5 wt% based on 100 wt% of the carboxylated single-walled carbon nanotubes. Subsequently, the carboxylated single-walled carbon nanotubes were mixed with a carboxylmethyl cellulose (CMC) aqueous solution (0.8 wt% of carboxylmethyl cellulose based on 100 wt% of a total of the carboxylmethyl cellulose and water) to obtain a carboxylated single-walled carbon nanotube-dispersed body in which the carboxylated single-walled carbon nanotubes had a solids content of 0.8 wt%.

Step 2: Graphene oxide 1 (an average sheet diameter: 7 μm), Graphene oxide 2 (an average sheet diameter: 700

nm), Graphene oxide 3 (an average sheet diameter: 70 nm), the carboxylated single-walled carbon nanotube-dispersed body, paraformaldehyde, and phenol were uniformly dispersed in a weight ratio of 1:0.5:0.25:1:19:19 (based on the solids content of the carboxylated single-walled carbon nanotubes) in a KOH alkali aqueous solution (pH=10) to obtain a dispersion having a solids content of 5 wt%.

Step 3: The dispersion was spray-dried at 180 °C to obtain particles with an average particle diameter ($D_{50}$) of 8 μm.

Step 4: The particles were dried at 180 °C in a vacuum oven, heated to 500 °C at 2 °C /min in a rotary furnace under a nitrogen atmosphere and maintained at the predetermined temperature for 12 hours, and heated again to 1,000 °C at 2 °C /min and maintained at the predetermined temperature for 1 hour. The particles were activated for 2 hours by converting nitrogen gas to aqueous vapor at the corresponding temperature and then also activated for 2 hours by converting the aqueous vapor to carbon dioxide ($CO_2$). After converting it to a nitrogen atmosphere, the particles were cooled to room temperature to obtain a hard carbon-based porous carbon material having a specific surface area of 2,000 $m^2/g$, a pore volume of 0.9 $cm^3/g$, a micropore ratio of 90%, and an average pore diameter of 1.8 nm ($N_2$-BET).

Step 5: The hard carbon-based porous carbon material was washed with water, dried at 100 °C in a vacuum oven, and then fluidized in a vertical CVD fluidized bed using nitrogen gas as transporting gas and protective gas. After introducing a silane/nitrogen mixed gas with 50 wt% of silane at a 40 L/min thereinto, the fluidized material was continuously fluidized at 550 °C for 5 hours to obtain a silicon-carbon composite material.

Step 6: The silicon-carbon composite material was placed in a rotary furnace, and acetylene gas was introduced thereinto at 700 °C for 3 hours, while using nitrogen gas as protective gas (the mixed gas had 5 wt% of acetylene), to perform CVD surface carbon coating, and finally obtaining a negative electrode active material. Based on 100 wt% of the total negative electrode active material, and based on 100 wt% of the silicon-carbon composite material, a carbon coating amount (a carbon content in a carbon layer) was 0.4 wt%, an amount of hard carbon was 45 wt%, an amount of a two-dimensional nanomaterial was 2.5 wt%, an amount of a conductive additive was 2.5 wt%, and an amount of silicon was 50 wt%. The silicon-carbon composite material had a pore volume utilization rate of about 48 v/v%.

**Preparation Example 2**

A negative electrode active material was prepared in the same manner as in Preparation Example 1 except that the activation process of Step 4 was changed to alkali activation. Specifically, the particles obtained in Step 3 were maintained at a predetermined temperature of 1,000 °C under a nitrogen atmosphere for 1 hour, cooled to room temperature, and mixed with a 30 wt% KOH solution in a solid weight ratio of 1:2 and then uniformly stirred for 4 hours and subsequently, dried in an oven at 100 °C to obtain an activation precursor containing KOH, and the activation precursor was activated at 700 °C in a rotary furnace under a nitrogen atmosphere for 4 hours.

**Preparation Example 3**

A negative electrode active material was prepared in the same manner as in Preparation Example 1 except that the carboxylated single-walled carbon nanotube-dispersed body was not used.

**Preparation Example 4**

A negative electrode active material was prepared in the same manner as in Preparation Example 1 except that the average sheet diameter of Graphene oxide 1 was changed to 4 μm, the average sheet diameter of Graphene oxide 2 was changed to 400 nm, and the average sheet diameter of Graphene oxide 3 was changed to 40 nm in Step 2.

**Preparation Example 5**

A negative electrode active material was prepared in the same manner as in Preparation Example 1 except that the average sheet diameter of Graphene oxide 1 was changed to 1 μm, the average sheet diameter of Graphene oxide 2 was changed to 200 nm, and the average sheet diameter of Graphene oxide 3 was changed to 40 nm in Step 2.

**Preparation Example 6**

A negative electrode active material was prepared in the same manner as in Preparation Example 1 except that the average sheet diameter of Graphene oxide 1 was changed to 9 μm, the average sheet diameter of Graphene oxide 2 was changed to 600 nm, and the average sheet diameter of Graphene oxide 3 was changed to 40 nm in Step 2.

**Preparation Example 7**

A negative electrode active material was prepared in the same manner as in Preparation Example 1 except that the average sheet diameter of Graphene oxide 1 was changed to 9 μm, the average sheet diameter of Graphene oxide 2 was changed to 900 nm, and the average sheet diameter of Graphene oxide 3 was changed to 90 nm in Step 2.

**Comparison Preparation Example 1**

A hard carbon-based porous carbon material with similar parameters (a specific surface area: 2,000 $m^2/g$, a pore volume: 0.9 $cm^3/g$, a micropore ratio: 90%, and an average pore diameter: 2 nm) was obtained by using Step 4 of Preparation Example 1 to activate a commercially available phenolic resin having non-spherical shape.
The hard carbon-based porous carbon material proceeded with silane deposition and CVD carbon coating by using Steps 5 and 6 of Preparation Examples 1 to obtain a negative electrode active material.

**Comparison Preparation Example 2**

A hard carbon-based porous carbon material with similar parameters (a specific surface area: 2,000 $m^2/g$, a pore volume: 0.9 $cm^3/g$, a micropore ratio: 90%, and an average pore diameter: 2 nm) was obtained by using Step 4 of Preparation Example 1 to activate a commercially available phenolic resin having a spherical shape.
The hard carbon-based porous carbon material proceeded with silane deposition and CVD carbon coating by using Steps 5 and 6 of Preparation Examples 1 to obtain a negative electrode active material.

**Comparison Preparation Example 3**

A negative electrode active material was obtained in the same manner as in Preparation Example 1 except that the average sheet diameter of Graphene oxide 1 was changed to 16 μm, the average sheet diameter of Graphene oxide 2 was changed to 800 nm, and the average sheet diameter of Graphene oxide 3 was changed to 40 nm in Step 2.

**Comparison Preparation Example 4**

A negative electrode active material was prepared in the same manner as in Preparation Example 1 except that the average sheet diameter of Graphene oxide 1 was changed to 360 μm, the average sheet diameter of Graphene oxide 2 was changed to 120 nm, and the average sheet diameter of Graphene oxide 3 was changed to 40 nm in Step 2.

**Comparison Preparation Example 5**

A negative electrode active material was prepared in the same manner as in Preparation Example 1 except that the graphene oxide was excluded and the carboxylated carbon nanotubes alone were used.
The negative electrode active materials of Preparation Examples 1 to 7 and Comparative Preparation Examples 1 to 5 were measured with respect to conductivity and a crushing force by using a powder resistance meter. The measurement conditions were a measurement temperature of 25 °C under relative humidity of less than 60%, measured by taking 2±0.01 g of powder for each measurement, performing three times measurements, and calculating an average of the three measurements. The Examples and Comparative Examples were also measured in a single-particle mechanics testing system under measurement conditions of a measurement temperature of 25 °C under relative humidity of less than 60% at indentation displacement speed of 0.1 μm/s, measured by selecting 5 particles with a particle diameter of 5±0.5 μm and calculating an average of their measurements. The results are shown in Table 1.

Table 1

| | Conductivity (S/mm) | Crushing force (mN) |
|---|---|---|
| Preparation Example 1 | 12.42 | 21.42 |
| Preparation Example 2 | 13.21 | 21.53 |
| Preparation Example 3 | 6.38 | 19.34 |
| Preparation Example 4 | 10.52 | 16.91 |
| Preparation Example 5 | 9.97 | 16.02 |
| Preparation Example 6 | 11.75 | 17.52 |

(continued)

| | Conductivity (S/mm) | Crushing force (mN) |
|---|---|---|
| Preparation Example 7 | 11.94 | 18.96 |
| Comparison Preparation Example 1 | 3.14 | 10.14 |
| Comparison Preparation Example 2 | 3.21 | 11.79 |
| Comparison Preparation Example 3 | 8.84 | 12.68 |
| Comparison Preparation Example 4 | 9.02 | 13.03 |
| Comparison Preparation Example 5 | 7.95 | 11.67 |

Referring to Table 1, Preparation Examples 1 to 7 exhibited much better crushing forces than Comparison Preparation Examples 1 to 5, which showed that structural strength was significantly improved by porous carbon structures formed as shown in FIGS. 3C and 3D. Preparation Examples 1 and 3 and Comparison Preparation Example 5 showed that two-dimensional graphene contributed much more to improving structural strength than one-dimensional carbon nanotubes, but a combination thereof turned out to have better effects. In addition, when comparing Preparation Examples 4 to 7 with Comparative Preparation Example 3 and Comparative Preparation Example 4, it can be seen that the overlapping structure of the two-dimensional graphene is important, and when the size range and size ratio of the two-dimensional nanomaterial was in accordance with the present disclosure, there is improved structural strength of the two-dimensional nanomaterial. But when the size ratio is too large or too small, the performance may be significantly reduced.

## Manufacturing of Lithium Ion Battery Cells

### Example 1

The negative electrode active material of Preparation Example 1, polyacrylic acid (PAA) as a binder, and single-walled carbon nanotubes (SWCNT) as a conductive material in a weight ratio of 89:10:1 were mixed in an aqueous solution to prepare a negative electrode slurry having a solid content of 15 wt%. The negative electrode slurry was coated on a surface of an 8 μm copper foil with a loading amount of 3 mg/cm$^2$ and a compression density of 1.3 g/cm$^3$ and then dried at 100 °C under vacuum for 4 hours to make a negative electrode.

The negative electrode, a separator, and a lithium metal counter electrode were housed in a case. After injecting an electrolyte solution thereinto, the case was sealed to make a CR2032 coin-type half-cell.

The electrolyte solution was prepared by mixing ethylene carbonate (EC), ethylmethyl carbonate (EMC), diethyl carbonate (DEC), and fluoroethylene carbonate (FEC) in a volume ratio of 1:1:1:0.3 and then dissolving 1.15 M of $LiPF_6$ in the mixed solvent.

### Examples 2 to 7

Lithium ion battery cells were made in the same manner as in Example 1 except that the negative electrode active materials according to Preparation Examples 2 to 7 were r used.

### Comparative Examples 1 to 5

Lithium ion battery cells were made in the same manner as in Example 1 except that the negative electrode active materials according to Comparison Preparation Examples 1 to 5 were used.

Subsequently, the lithium ion battery cells of the examples and the comparative examples were subjected to charging and discharging tests.

The lithium ion battery cells of the examples and the comparative examples were measured with respect to initial charge specific capacity, 1.5 V initial efficiency, 0.8 V initial efficiency, and a capacity retention rate (for example, 50 cycles) in the following evaluation methods.

A CC/CV discharge-CC charge test was performed at 25 °C in a constant temperature chamber. First, the cells were constant current (CC)-discharged to 5 mV at a C-rate of 0.1 C and discharged at a constant voltage (CV) of 5 mV at 25 °C, wherein a cut-off current was 0.01 C, and cut-off time was 15 hours. Subsequently, the cells were constant current-charged to 1.5 V at 0.1 C, and this charge/discharge process was repeated twice. Then, the cells were constant current-discharged to 5 mV at 0.33 C and constant voltage-discharged at 5 mV at 25 °C, wherein a cut-off current was 0.01 C, and cut-off time was 15 hours. Subsequently, the cells were constant current-charged to 1.5 V at 0.33 C, and this charge/-

discharge process was repeated 50 times. The measurement results are shown in Table 2. The initial efficiency and the capacity retention rate were respectively calculated according to Equations 1 and 2.

initial efficiency (%) = (initial charge specific capacity / initial discharge specific capacity) $\times$ 100    Equation 1:

capacity retention rate (%) = (50th cycle discharge specific capacity / 1st cycle discharge specific capacity) $\times$ 100    Equation 2:

Table 2

| | Initial charge specific capacity (mAh/g) | 1.5 V initial efficiency (%) | 0.8 V initial efficiency (%) | Capacity retention rate (%) |
|---|---|---|---|---|
| Example 1 | 1930.35 | 90.85 | 86.52 | 86.19 |
| Example 2 | 1932.87 | 90.77 | 86.65 | 86.72 |
| Example 3 | 1853.65 | 91.12 | 83.98 | 84.87 |
| Example 4 | 1894.73 | 90.24 | 85.12 | 83.56 |
| Example 5 | 1879.93 | 89.92 | 84.89 | 83.12 |
| Example 6 | 1908.89 | 90.51 | 85.32 | 84.20 |
| Example 7 | 1914.72 | 90.55 | 85.68 | 84.65 |
| Comparative Example 1 | 1835.23 | 91.54 | 83.13 | 77.23 |
| Comparative Example 2 | 1838.52 | 91.46 | 83.25 | 78.05 |
| Comparative Example 3 | 1868.25 | 89.82 | 84.52 | 79.34 |
| Comparative Example 4 | 1873.56 | 89.02 | 84.87 | 79.84 |
| Comparative Example 5 | 1861.89 | 90.74 | 84.25 | 78.82 |

Table 2 shows electrochemical performance after depositing the same amount (50 wt%) of silicon, which is essentially consistent with the expected porous carbon performance of Table 1. This shows that porous carbon structures and performances significantly influence the subsequent electrochemical performance. Examples 1 and 2 exhibited the best 0.8V initial efficiency and capacity retention rate after the $50^{th}$ cycle. This shows that the overlapping structure of two-dimensional material with an optimal size and size ratio with one-dimensional material provided a porous carbon structure with high conductivity and structural strength, thereby controlling and/or mitigating massive expansion/contraction of an internal silicon material. In addition, although the incorporation of the two-dimensional graphene and the one-dimensional carbon nanotube might introduce some irreversible capacity, the rational structure improved ion/electron transport efficiency within the particles, thereby more fully utilizing capacity of silicon and significantly reducing DCR at the end of delithiation. In other words, when cut off at 0.8 V, the cells emit more lithium ions in a low voltage region, which may be advantageous in that silicon-carbon negative electrodes perform better in terms of capacity in full cells.

The above-described embodiments are only intended to explain the technical solution of the present disclosure and are not intended to limit the present disclosure. Although the present disclosure has been described in detail with reference to preferred embodiments, it should be understood that modifications or equivalent substitutions are possible for those skilled in the art without departing from the technical solution and scope of the present disclosure.

**<Description of Symbols>**

| | | | |
|---|---|---|---|
| 100: | rechargeable lithium battery | 10: | positive electrode |
| 20: | negative electrode | 30: | separator |
| 40: | electrode assembly | 50: | case |
| 60: | sealing member | S1: | first layer |
| S2: | second layer | S3: | third layer |

(continued)

| | | | |
|---|---|---|---|
| S4: | fourth layer | A1: | conductive additive |

## Claims

**1.** A negative electrode active material for a lithium ion battery, the negative electrode active material comprising: a silicon-carbon composite material comprising:

a first layer disposed at a center of the silicon-carbon composite material and including a hard carbon-based porous carbon material having silicon coated therein, and
a second layer coating on an outside of the first layer and including a two-dimensional nanomaterial including one or more of graphene, graphene oxide, MXene, molybdenum disulfide, and graphyne.

**2.** The negative electrode active material as claimed in claim 1, wherein the silicon-carbon composite material further comprises a third layer and a fourth layer laminated on the second layer in an outward direction from the center of the silicon-carbon composite material,

wherein the third layer comprises a hard carbon-based porous carbon material having silicon coated therein, and
wherein the fourth layer comprises a two-dimensional nanomaterial having a sheet diameter different from a sheet diameter of the two-dimensional nanomaterial of the second layer.

**3.** The negative electrode active material as claimed in claim 2, wherein the silicon-carbon composite material comprises a plurality of the third layer and a plurality of the fourth layer,

wherein a sheet diameter of the two-dimensional nanomaterial of the fourth layer is greater than the sheet diameter of the two-dimensional nanomaterial of the second layer, and
wherein the sheet diameter of the two-dimensional nanomaterial of the fourth layer that is farther from the center of the silicon-carbon composite material is greater than the sheet diameter of the two-dimensional nanomaterial of the fourth layer that is closer to the center of the silicon-carbon composite material.

**4.** The negative electrode active material as claimed in claim 3, wherein the sheet diameter of the two-dimensional nanomaterial of the fourth layer adjacent to the second layer is 5 to 15 times the sheet diameter of the two-dimensional nanomaterial of the second layer, and

wherein the sheet diameter of the two-dimensional nanomaterial of the fourth layer that is farther from the center of the silicon-carbon composite material is 5 to 15 times the sheet diameter of the two-dimensional nanomaterial of the fourth layer that is closer to the center of the silicon-carbon composite material;
or
wherein an amount of the two-dimensional nanomaterial in the fourth layer adjacent to the second layer is 1.5 to 3 times an amount of the two-dimensional nanomaterial in the second layer, and
wherein an amount of the two-dimensional nanomaterial in the fourth layer that is farther from the center of the silicon-carbon composite material is 1.5 to 3 times an amount of the two-dimensional nanomaterial in the fourth layer that is closer to the center of the silicon-carbon composite material.

**5.** The negative electrode active material as claimed in claim 3, wherein the silicon-carbon composite material comprises two fourth layers,
wherein the sheet diameter of the two-dimensional nanomaterial of the fourth layer that is farther from the center of the silicon-carbon composite material is 1 μm to 10 μm, the sheet diameter of the two-dimensional nanomaterial of the fourth layer that is closer to the center of the silicon-carbon composite material is 100 nm to 1 μm, and the sheet diameter of the two-dimensional nanomaterial of the second layer is 10 nm to 100 nm.

**6.** The negative electrode active material as claimed in any one of claims 1 to 5, wherein the first layer and the third layer further comprise a conductive additive distributed in a hard carbon-based porous carbon material in a radial direction from the center of the silicon-carbon composite material, and
wherein the conductive additive comprises one or more of a functionalized single-walled carbon nanotube, a functionalized few-walled carbon nanotube, a functionalized multi-walled carbon nanotube, and a functionalized

carbon nanofiber.

**7.** The negative electrode active material as claimed in claim 6, wherein a functional group of the conductive additive comprises one or more of a carboxyl group, a hydroxyl group, and an amino group, and

wherein an amount of the functional group is 0.1 wt% to 5 wt% based on 100 wt% of the conductive additive; and/or
wherein the conductive additive has a length of 1 μm to 50 μm and a diameter of 0.5 nm to 5 nm; and/or
wherein, based on 100 wt% of the silicon-carbon composite material, an amount of the hard carbon-based porous carbon material is 24 wt% to 63 wt%, an amount of the two-dimensional nanomaterial is 0.15 wt% to 7 wt%, an amount of the conductive additive is 0.15 wt% to 7 wt%, and an amount of the silicon is 30 wt% to 70 wt%.

**8.** The negative electrode active material as claimed in any one of claims 1, wherein the silicon-carbon composite material is a spherical or quasi-spherical particle with a wrinkled surface;
and, optionally,

wherein the negative electrode active material further includes a carbon layer coating the outer surface of the silicon-carbon composite material,
wherein a thickness of the carbon layer is 1 nm to 40 nm,
wherein a carbon content in the carbon layer is 0.1 wt% to 5 wt% based on 100 wt% of the negative electrode active material.

**9.** A negative electrode comprising the negative electrode active material as claimed in any one of claims 1 to 8.

**10.** A lithium ion battery comprising:

an electrode assembly comprising a positive electrode, a negative electrode, and a separator between the positive electrode and the negative electrode; and
an electrolyte solution impregnated into the electrode assembly,
wherein the negative electrode comprises the negative electrode active material as claimed in any one of claims 1 to 8.

**11.** A method of preparing the negative electrode active material for a lithium ion battery as claimed in any one of claims 1 to 8, the method comprising:

mixing a two-dimensional nanomaterial including one or more of graphene, graphene oxide, MXene, molybdenum disulfide, and graphyne and a hard carbon source with a solvent to obtain a dispersion having a solids content of 0.1 wt% to 20 wt%;
spray drying the dispersion to obtain particles of the hard carbon source coated with the two-dimensional nanomaterial, the particles having a particle size of 5 μm to 30 μm;
activating the particles to form a hard carbon-based porous carbon material including pores from the hard carbon source; and
depositing silane to dispose silicon within the pores of the hard carbon-based porous carbon material to thereby obtaining a silicon-carbon composite material.

**12.** The method as claimed in claim 11, wherein the two-dimensional nanomaterial comprises a first two-dimensional nanomaterial and a second two-dimensional nanomaterial having different sheet diameters, and
wherein the sheet diameter of the second two-dimensional nanomaterial is 5 to 15 times the sheet diameter of the first two-dimensional nanomaterial.

**13.** The method as claimed in claim 12, wherein the two-dimensional nanomaterial comprises two-dimensional nanomaterials having three different sheet diameters, and

wherein the sheet diameter of a two-dimensional nanomaterial having a large sheet diameter is 1 μm to 10 μm, the sheet diameter of a two-dimensional nanomaterial having a medium sheet diameter is 100 nm to 1 μm, and the sheet diameter of a two-dimensional nanomaterial having a small sheet diameter is 10 nm to 100 nm;
optionally,

wherein an amount of the two-dimensional nanomaterial of the large sheet diameter is 1.5 to 3 times that of the two-dimensional nanomaterial of the medium sheet diameter, and
wherein an amount of a two-dimensional nanomaterial having a medium sheet diameter is 1.5 to 3 times that of a two-dimensional nanomaterial having a small sheet diameter.

**14.** The method as claimed in any one of claims 11 to 13, wherein the hard carbon source comprises one or more an epoxy resin or an epoxy resin precursor, a phenol resin or a phenol resin precursor, a furfuryl alcohol resin or a furfuryl alcohol resin precursor, glucose, chitosan, cellulose, lignin, starch, and pitch.

**15.** The method as claimed in any one of claims 11 to 14, wherein the method further comprises mixing a conductive additive with a dispersant to obtain a conductive additive dispersed body, and adding the conductive additive dispersed body to the dispersion liquid, and
wherein the conductive additive comprises one or more of a functionalized single-walled carbon nanotube, a functionalized multi-walled carbon nanotube, and a functionalized carbon.

FIG. 1

Silicon
A1
S1
S2

FIG. 2

FIG. 3A

: Two-dimensional nanomaterial
: Conductive additive
: Hard carbon source

FIG. 3B

S3
S4
A1
S2
S1

FIG. 3C

S3
S4
S2
A1
S1

FIG. 3D

Silicon
S3
S4
S2
A1
S1

FIG. 4

60
100
40
10
30
20
50

# EUROPEAN SEARCH REPORT

Application Number
EP 26 16 5433

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | CN 113 851 627 A (JIANGSU E ONTECH CO LTD) 28 December 2021 (2021-12-28)<br>* paragraphs [0010], [0012], [0021] - [0023] *<br>----- | 1,9,10<br>8,11,14<br>2-7,12, 13,15 | INV.<br>H01M4/36<br>H01M4/38<br>H01M4/587<br>H01M4/62 |
| A | WU JUNXIONG ET AL: "Multilayered silicon embedded porous carbon/graphene hybrid film as a high performance anode", CARBON ELSEVIER OXFORD, GB, [Online] vol. 84, 15 December 2014 (2014-12-15), pages 434-443, XP029132065, ISSN: 0008-6223, DOI: 10.1016/J.CARBON.2014.12.036 Retrieved from the Internet: URL:https://www.sciencedirect.com/science/article/pii/S000862231401197X> [retrieved on 2026-06-10]<br>* abstract;<br>figures 1a, 1b *<br>----- | 2-7 | |
| | -/-- | | TECHNICAL FIELDS SEARCHED (IPC)<br>H01M |

The present search report has been drawn up for all claims

| Place of search | Date of completion of the search | Examiner |
|---|---|---|
| The Hague | 19 June 2026 | Jones, Alexandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

3

EPO FORM 1503 03.82 (P04C01)

Europäisches
Patentamt
European
Patent Office
Office européen
des brevets

# EUROPEAN SEARCH REPORT

Application Number
EP 26 16 5433

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SHE ZIMIN ET AL: "Controlling Void Space in Crumpled Graphene-Encapsulated Silicon Anodes using Sacrificial Polystyrene Nanoparticles - She - 2021 - ChemSusChem - Wiley Online Library", CHEMSUSCHEM, [Online] vol. 14, no. 14, 10 June 2021 (2021-06-10), pages 2952-2962, XP093405905, DE ISSN: 1864-5631, DOI: 10.1002/cssc.202100687 Retrieved from the Internet: URL:https://chemistry-europe.onlinelibrary.wiley.com/doi/full/10.1002/cssc.202100687 > [retrieved on 2026-06-10] | 8 | |
| A | * abstract; page 2957, column 2, line 4 - line 8; figure 2 * | 2-7, 11-15 | |
| | ----- | | |
| Y | US 2024/421289 A1 (LIU LIANGBIN [CN] ET AL) 19 December 2024 (2024-12-19) | 11,14 | TECHNICAL FIELDS SEARCHED (IPC) |
| A | * paragraphs [0044] - [0056], [0113], [0125] * | 12,13,15 | |
| | ----- | | |

The present search report has been drawn up for all claims

| Place of search | Date of completion of the search | Examiner |
|---|---|---|
| The Hague | 19 June 2026 | Jones, Alexandra |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 26 16 5433

This annex lists the patent family members relating to the patent documents cited in the above-mentioned European search report. The members are as contained in the European Patent Office EDP file on The European Patent Office is in no way liable for these particulars which are merely given for the purpose of information.

19-06-2026

| Patent document cited in search report | Publication date | Patent family member(s) | Publication date |
|---|---|---|---|
| CN 113851627 A | 28-12-2021 | NONE | |
| US 2024421289 A1 | 19-12-2024 | CN 118104009 A | 28-05-2024 |
| | | EP 4539159 A1 | 16-04-2025 |
| | | US 2024421289 A1 | 19-12-2024 |
| | | WO 2023240381 A1 | 21-12-2023 |

EPO FORM P0459

For more details about this annex : see Official Journal of the European Patent Office, No. 12/82